# EUROPEAN PATENT SPECIFICATION

(11) **EP 2 202 104 B1**
(45) Date of publication and mention of the grant of the patent: **13.04.2011**
(21) Application number: 08172887.5
(22) Date of filing: 24.12.2008
(51) Int. Cl.: B60G 7/02, B60G 9/02, B60G 21/05

(54) **Suspension for a rigid axle of a road transport vehicle and a corresponding road transport vehicle**
Aufhängung für eine Starrachse eines Straßentransportfahrzeugs und entsprechendes Straßentransportfahrzeug
Suspension pour axe rigide d'un véhicule de transport routier et véhicule de transport routier correspondant

(43) Date of publication of application: 30.06.2010
(73) Proprietor: Iveco France S.A., 69200 Vénissieux (FR)
(72) Inventor: Leorat, Pascal, 07690 Villevocance (FR)
(74) Representative: Borsano, Corrado

(56) References cited:
- FR-A- 2 842 462
- US-A- 3 007 715

## Description

The present invention relates to a suspension for a rigid axle of a road transport vehicle, and a road transport vehicle provided with at least such a suspension.

The road transport vehicles that are the object of the invention are notably transport vehicles, namely those that are capable of accommodating passengers. It also finds its application in vehicles of the heavy goods type, or else in automobiles.

Usually, this type of suspension is provided with various means, with the object of holding the axle rigid relative to the body of the vehicle.

Therefore, means are first of all provided for retention in the longitudinal and twisting directions. The latter usually include two parallel longitudinal arms, which are situated in a first plane, most frequently the bottom plane.

The suspension also comprises means for retention in the transverse and roll directions. These are conventionally two bars forming a V, which are situated in another plane, most frequently the top plane.

Finally, the solution described above also makes use of an additional mechanical element, namely an anti-roll bar. It can be seen therefore that this solution requires a large number of elements in order to manage, on the one hand, the transverse retention and, on the other hand, the roll of the vehicle.

In order to remedy this disadvantage, various types of suspension have been proposed, the transverse retention means of which also perform an anti-roll function. In this respect, reference should be made in particular to EP-A-0 776 275, EP-A-1 037 757, DE-A-195 218 874 and FR 2 842 462.

These various alternative solutions make use of a four-point oscillating arm, made notably in the form of a cross that can be flexed in torsion. In this arrangement, two first ends of this arm are articulated on the body of the vehicle by means of swivel joints, while the other two ends are articulated on the axle of the vehicle, by means of additional swivel joints.

This second solution however has certain disadvantages. Specifically, it turns out to be of a hyperstatic nature, notably because of the use of the four swivel-joint articulations. In this situation, it is necessary to create zones of flexibility, so as not to induce forces that are too great.

In addition, this solution is not able to be modulated very much according to the various types of vehicle. Specifically, it is necessary to provide an entirely new oscillating arm, in the case of a different use.

The invention proposes to remedy these various disadvantages.

Accordingly, its subject is a suspension according to Claim 1 attached.

Advantageous features of the invention are the subject of the attached subsidiary claims.

A further subject of the invention is a vehicle according to Claim 15 attached.

The invention will be described below, with reference to the appended drawings, given only as a nonlimiting example, in which:
- Figure 1 is a view in perspective, illustrating a suspension according to the invention for a rigid axle of a road transport vehicle;
- Figure 2 is a view in perspective, illustrating on a larger scale some of the mechanical elements belonging to this suspension;
- Figure 3 is a side view, illustrating a variant embodiment of the arrangement of Figure 2; and
- Figure 4 is a front view, illustrating some of the mechanical elements belonging to a suspension according to an additional variant embodiment of the invention.

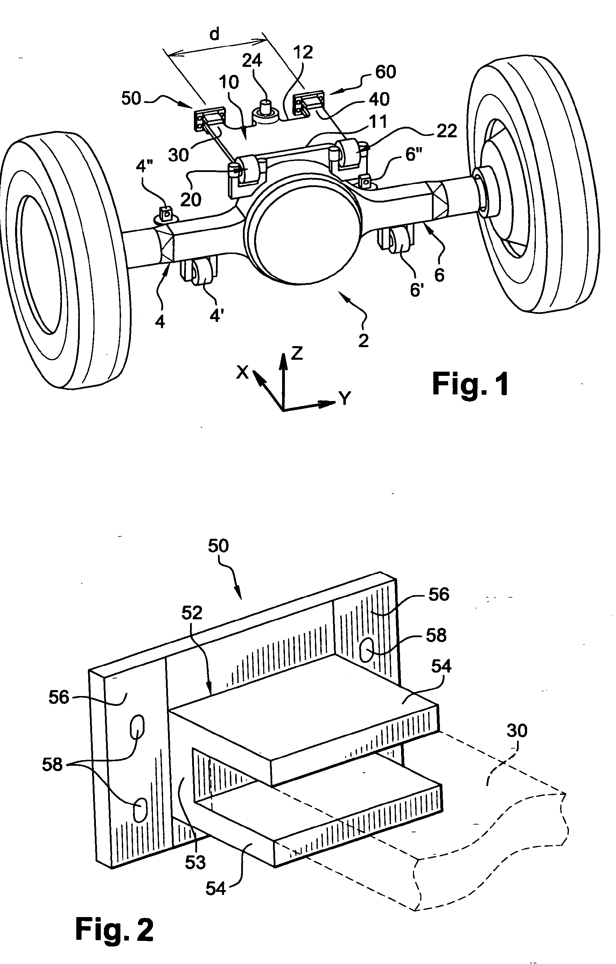

The suspension according to the invention, shown in particular in Figure 1, provides the retention between a rigid axle of a vehicle and the chassis of this same vehicle. The rigid axle, which is given reference number 2 in Figure 1, is of the conventional type so it will not be described in further detail below. In addition, the aforementioned chassis, which is also of a type known per se, is not shown in this figure.

The suspension according to the invention first of all comprises longitudinal retention means. These are two longitudinal arms 4 and 6, of conventional structure, which will not be described in further detail below. Each arm 4 and 6 is connected to the axle 2 and to the chassis, by means of swivel-joint articulations 4', 4", 6' and 6". These two arms 4 and 6 extend in a bottom, substantially horizontal, plane called P.

Also provided are transverse retention means, also performing an anti-roll function. It will be noted that these means also play a role in the longitudinal retention, with the aforementioned arms 4 and 6.

These transverse retention means first of all comprise a basic structure, made in the form of a plate 10 extending along a top plane P'. The latter, which is substantially horizontal, is consequently generally parallel to the bottom plane P defined by the arms 4 and 6.

In a top view, the plate 10 is substantially rectangular. In what follows, the front, rear, right and left of this plate are oriented with reference to Figure 1, in which the axle is seen from behind.

The plate 10 is first of all associated with three swivel joints, of conventional structure, providing the connection between the axle 2 and the chassis. There are therefore, on the rear edge 11 of this plate 10, two first swivel joints 20 and 22 provided at the lateral ends of this plate. In addition, at the front edge 12 of this plate, an additional swivel joint 24 is provided which is placed substantially in the middle-of this front edge.

On this same front edge 12, in the vicinity of the lateral ends of the plate, the latter is extended by two protrusions, respectively left 30 and right 40, extending forwards. These protrusions interact with two additional connecting members 50 and 60 which will be described in greater detail below.

Figure 2 illustrates more particularly the left member 50, it being understood that the member 60 placed on the right of the plate has an identical structure. This member 50 comprises first of all a body 52 having a C shape, that is it has a web 53 and two flanges 54. In service, the web 53 extends in the vicinity of the free end of the protrusion 30 while the two flanges 54 cover the respectively upper and lower walls of this same protrusion.

It will be noted that this body 52 and, in particular, its flanges 54 are made of an appropriate elastic material, of predetermined stiffness. As will be seen in greater detail below, the presence of such a material allows a damping of the vertical movements by means of the connecting member 50. It will be noted that there are no additional connecting means between the body 52 and the protrusion 30. In other words, this connection is provided only by interlocking. In this situation, there is a possibility of mutual clearance between the body 52 and this protrusion 30, in the two directions perpendicular to one another of the plane P' of the plate 10. On the other hand, since the protrusion 30 is clamped between the two flanges 54, this protrusion is secured in translation relative to the body 52 in a vertical direction.

The body 52 is extended by two lateral lugs 56 allowing attachment to a vertical wall of the body, notably by means of screws not shown entering orifices 58 made in these lugs. It can be understood therefore that the connection between the member 50 and the protrusion 30 is of the removable type, while being adjustable.

Therefore, from a given position of the connecting member 50 on the chassis, it is possible to remove the screws in order to position this member differently, relative to the chassis and therefore relative to the plate 10. In other words, it is possible to place the two members 50 and 60 in a manner that is further from or closer to the median longitudinal axis X of the vehicle.

Alternatively, it is possible to separate the connecting members 50 and 60 from the chassis, and then choose to replace them with other pairs of connecting members having different features, notably in terms of stiffness.

During the progression of the road transport vehicle, the three swivel joints 20, 22 and 24 retain the axle transversely relative to the chassis. In addition, the two connecting members 50 and 60 perform the anti-roll function. More precisely, roll occurs when the body is placed in rotation relative to the median longitudinal axis X. In this situation, this body exerts forces on the two connecting members 50 and 60 in a substantially vertical direction, that is to say on the axis Z.

Depending on the stiffness of the flanges 54, these roll forces are damped to a greater or lesser degree. It should be noted that it is possible to adjust the value of anti-roll stiffness according to several possibilities described below.

As has been seen above, each member 50 and 60 is connected removably relative to the plate 10. In this situation, it is first of all possible to replace a first pair of connecting members with another pair of members having different values of stiffness.

In addition, it is possible to retain the same pair of connecting members while modifying their position so as to adjust the distance d separating these two members, on the transverse axis Y. It can be seen that, the greater this distance d, the greater the anti-roll stiffness.

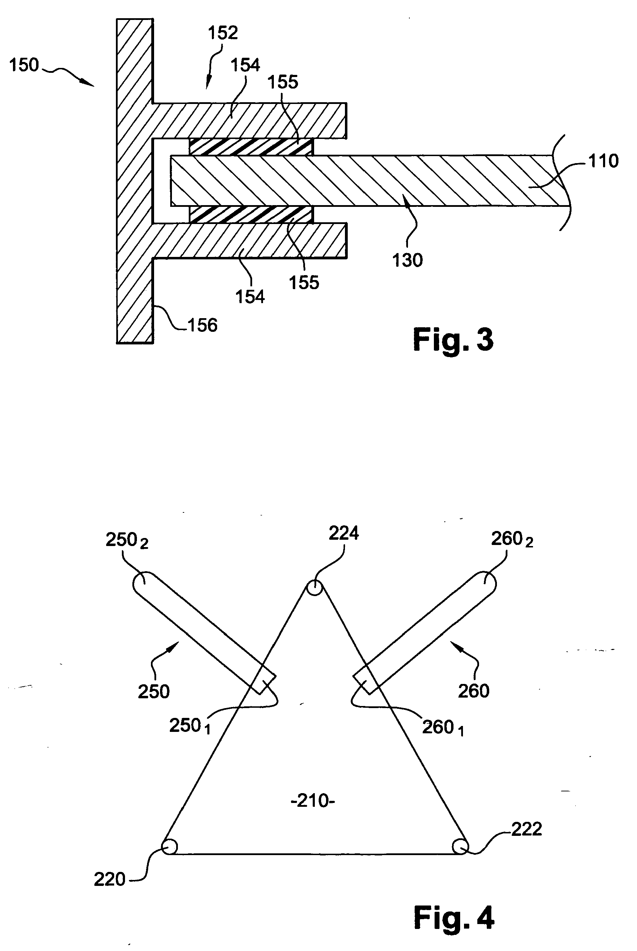

It will be emphasized therefore that the invention makes it possible to vary the anti-roll stiffness without thereby modifying the basic structure 10 and the various swivel joints 20, 22 and 24. This should be compared with the prior art making use of a four-point arm, which must be changed in totality if it is desired to modify this stiffness value. Figure 3 illustrates a variant of the first embodiment, illustrated with reference to Figures 1 and 2. In this Figure 3, the mechanical elements that are similar to those of Figures 1 and 2 are allocated the same reference numbers plus 100.

This variant of Figure 3 differs from the embodiment of Figures 1 and 2 in that the body 152 and, in particular, its flanges 154 are made of a rigid material. In addition, two elastic pads 155 are interposed between the walls facing the flanges 154 -and the protrusion 130 belonging to the plate 110.

These pads 155 may be attached to the flanges 154 by any appropriate means. Therefore, they may be secured permanently, notably by bonding. As a variant, these pads may be clamped between the protrusion 130 and the flanges 154 so that they are fixed in a removable manner and may be easily replaced by buffers of a different kind.

The additional connecting member 150, illustrated in this Figure 3, advantageously forms a rigid one-piece part. The body 152 is then extended in one piece by the two lateral lugs 156 designed for attachment to the wall of the body.

As a variant not shown it is possible to arrange to replace the C-shaped body 52 or 152 with any appropriate connection. In this case, it is a connection that is substantially rigid in the vertical direction, while allowing a clearance in the horizontal plane between the protrusion 30 or 130 and the additional connecting member.

The suspension according to the invention makes it possible to remedy, in a large measure, the hyperstaticity problem associated with the solutions making use of the four-point arm. On the contrary, the suspension of the invention is of the isostatic kind, which therefore prevents the introduction of parasitic stresses into the suspension elements and the chassis itself. In addition, since the functions of guidance and anti-roll are decoupled, it is simpler to fine tune and it is possible to obtain various values of anti-roll stiffness.

Figure 4 illustrates another variant embodiment of the invention. In this figure, the mechanical elements that are similar to those of Figures 1 and 2 are given the same reference numbers plus 200.

This Figure 4 illustrates more particularly the transverse retention means which comprise a basic structure 210. The latter differs from the plate 10 described above in that it has a triangular shape. In_Figure 4, the front of this basic structure 210, which is rigid, corresponds to the top portion of the sheet.

This basic structure 210 supports three swivel joints, namely two first swivel joints 220 and 222 placed at the rear and an additional swivel joint 224 placed at the front. In addition, this rigid structure 210 is associated with two lugs 250 and 260 forming additional connecting members.

At their rear end 250₁, 260₁, each lug is attached to the rigid structure 210 in a removable manner, by any appropriate means. In addition, the two lugs 250 and 260 extend forwards from the basic structure in a divergent manner.

At their other end 250₂, 260₂, they are secured to the chassis by any appropriate connection. The latter connection may be similar to that described in Figures 1 or 2, or else be replaced by any other connection providing a possibility of clearance in a horizontal plane, while being rigid in the vertical direction.

The two connecting lugs 250 and 260, illustrated in Figure 4, may be replaced by at least one pair of additional lugs having different stiffnesses. This difference of stiffnesses may be achieved by varying the length and/or the thickness and/or the constituent material and/or the shape of these lugs.

Finally, it will be noted that, in the examples illustrated, two first swivel joints provide the articulation between the basic structure and the axle, while the connection between the basic structure and the chassis is provided by an additional swivel joint and the two additional connecting members. As a variant, it is also possible to produce a solution of the mirror type. In this case, the first two swivel joints connect the basic structure to the chassis, while the latter is connected to the axle by means of the additional swivel joint and the two additional connecting members.

## Claims

1. Suspension for a rigid axle (2) of a road transport vehicle, in particular of a heavy goods vehicle, comprising means for the longitudinal retention of the axle relative to a chassis of the vehicle, in particular two longitudinal bars (4, 6), and means for the transverse retention of this axle relative to this chassis, also forming anti-roll means, **characterized in that** these transverse retention means comprise a basic structure (10; 110; 210), two first swivel joints (20, 22; 220, 222) ensuring the articulation between the basic structure and one of either the axle or the chassis, one additional swivel joint (24; 224) providing the articulation of the basic structure with the other of the axle or the chassis, and two additional connecting members (50, 60; 150; 250, 260), connecting the basic structure and the other of the axle or the chassis, these additional connecting members performing the anti-roll function.

2. Suspension according to Claim 1, **characterized in that** the basic structure is a plate (10; 110; 210).

3. Suspension according to the preceding claim, **characterized in that** the plate (10; 110; 210) extends along a first plane, called the upper plane, substantially parallel to another plane, called the lower plane, defined by the longitudinal retention means (4, 6).

4. Suspension according to any one of the preceding claims, **characterized in that** the first two swivel joints (20, 22; 220, 222) are placed on a first transverse edge, in particular a rear edge (11), of the basic structure (10; 210), while the additional swivel joint (24; 224) is placed on the opposite transverse edge (12) in a median position with reference to the median longitudinal axis (X) of the vehicle.

5. Suspension according to the preceding claim, **characterized in that** the two additional connecting members (50, 60; 150) are placed on the said opposite edge (12), in a symmetrical manner with respect to the median longitudinal axis (X).

6. Suspension according to any one of the preceding claims, **characterized in that** each additional connecting member (50, 60; 150) has two degrees of freedom in translation relative to the basic structure (10; 110) in the two directions that are perpendicular to one another of the plane of this structure, each connecting member on the other hand being secured to the basic structure in a third direction (Z) perpendicular to this plane.

7. Suspension according to the preceding claim, **characterized in that** each additional connecting member (50, 60; 150) has a body (52; 152) that is generally C-shaped, the flanges (54; 154) of which joint the basic structure (10; 110).

8. Suspension according to the preceding claim, **characterized in that** the body (52; 152) of the additional connecting member (50; 150) is extended by means of attachment to the chassis of the vehicle, in particular two lugs (56; 156) provided with orifices for attachment elements, such as screws, to pass through.

9. Suspension according to one- of Claims 7 or 8, **characterized in that** the body (52) of the additional connecting member (50) is made of an elastic material.

10. Suspension according to the preceding claim, **characterized in that** at least one other pair of additional connecting members is provided, the stiffness of which is different from that of the first pair of additional connecting members (50, 60).

11. Suspension according to Claim 7 or 8, **characterized in that** the body (152) of the additional connecting member is rigid, and **in that** at least one damping pad (155) is interposed between the walls facing this body (152) and the basic structure (110).

12. Suspension according to Claim 4, **characterized in that** the two additional connecting members comprise lugs (250, 260) extending, from the basic structure (210), towards the said opposite edge, these lugs being attached removably to the basic structure.

13. Suspension according to the preceding claim, **characterized in that** the basic structure (210) has a triangular shape, and **in that** the two lugs (250, 260) extend from two sides of this triangle.

14. Suspension according to Claim 12 or 13, **characterized in that** at least one other pair of lugs is provided, the stiffness of which is different from that of the first pair of lugs (250, 260).

15. Road transport vehicle comprising a chassis, and at least one rigid axle (2) comprising a suspension according to any one of the preceding claims.

## Patentansprüche

1. Aufhängung für eine Starrachse (2) eines Straßentransportfahrzeugs, insbesondere eines Schwerlastfahrzeugs, umfassend Mittel zur Längshalterung der Achse relativ zu einem Fahrgestell des Fahrzeugs, insbesondere zwei Längsstäbe (4, 6), und Mittel zur Querhalterung dieser Achse relativ zu diesem Fahrgestell, die auch Rollstabilisatormittel bilden, **dadurch gekennzeichnet, dass** diese Querhalterungsmittel eine Grundstruktur (10; 110; 210), zwei erste Drehgelenke (20, 22; 220, 222), die die Anlenkung zwischen der Grundstruktur und einem von entweder der Achse oder dem Fahrgestell sicherstellen, umfassen, wobei ein zusätzliches Drehgelenk (24; 224) die Anlenkung der Grundstruktur mit dem anderen von der Achse oder dem Fahrgestell bereitstellt, und zwei zusätzliche Verbindungselemente (50, 60; 150; 250, 260) umfasst, die die Grundstruktur und das andere von der Achse oder dem Fahrgestell verbinden, wobei diese zusätzlichen Verbindungselemente die Rollstabilisatorfunktion erfüllen.

2. Aufhängung nach Anspruch 1,
**dadurch gekennzeichnet, dass**
die Grundstruktur eine Platte (10; 110; 210) ist.

3. Aufhängung nach dem vorhergehenden Anspruch,
**dadurch gekennzeichnet, dass**
die Platte (10; 110; 210) sich entlang einer ersten Ebene, die obere Ebene genannt, im Wesentlichen parallel zu einer anderen Ebene, die untere Ebene genannt, die durch die Längshalterungsmittel (4, 6) definiert sind, erstreckt.

4. Aufhängung nach einem der vorhergehenden Ansprüche,
**dadurch gekennzeichnet, dass**
die ersten zwei Drehgelenke (20, 22; 220, 222) an einem ersten Querrand insbesondere einem hinteren Rand (11), der Grundstruktur (10; 210) platziert sind, während das zusätzliche Drehgelenk (24; 224) an dem entgegengesetzten Querrand (12) in einer mittleren Position mit Bezug auf die Mittellängsachse (X) des Fahrzeugs platziert ist.

5. Aufhängung nach dem vorhergehenden Anspruch,
**dadurch gekennzeichnet, dass**
die zwei zusätzlichen Verbindungselemente (50, 60; 150) an dem entgegengesetzten Rand (12) auf eine symmetrische Weise mit Bezug auf die Mittellängsachse (X) platziert sind.

6. Aufhängung nach einem der vorgehenden Ansprüche,
**dadurch gekennzeichnet, dass**
jedes zusätzliches Verbindungselement (50, 60; 150) zwei Translationsfreiheitsgrade relativ zu der Grundstruktur (10; 110) in den zwei senkrecht zueinander liegenden Richtungen der Ebene dieser Struktur aufweist, wobei jedes Verbindungselement andererseits an der Grundstruktur in einer dritten Richtung (Z) senkrecht zu dieser Ebene befestigt ist.

7. Aufhängung nach dem vorhergehenden Anspruch,
**dadurch gekennzeichnet, dass**
jedes zusätzliches Verbindungselement (50, 60; 150) einen Körper (52; 152) aufweist, der im Allgemeinen C-förmig ist, wobei dessen Flansche (54; 154) die Grundstruktur (10; 110) verbinden.

8. Aufhängung nach dem vorhergehenden Anspruch,
**dadurch gekennzeichnet, dass**
der Körper (52; 152) des zusätzlichen Verbindungselements (50; 150) durch Anbringungsmittel an das Fahrgestell des Fahrzeugs, insbesondere zwei Ansätze (56; 156), verlängert ist, die mit Öffnungen zur Durchführung von Anbringungselementen, wie Schrauben, versehen sind.

9. Aufhängung nach einem der Ansprüche 7 oder 8,
**dadurch gekennzeichnet, dass**
der Körper (52) des zusätzlichen Verbindungselements (50) aus einem elastischen Material hergestellt ist.

10. Aufhängung nach dem vorhergehenden Anspruch,
**dadurch gekennzeichnet, dass**
zumindest ein weiteres Paar von zusätzlichen Verbindungselementen vorgesehen ist, deren Steifigkeit sich von der des ersten Paares zusätzlicher Verbindungselemente (50, 60) unterscheidet.

11. Aufhängung nach Anspruch 7 oder 8,
**dadurch gekennzeichnet, dass**
der Körper (152) des zusätzlichen Verbindungselements starr ist, und dass zumindest ein Dämpfungspolster (155) zwischen den Wänden, die diesem Körper (152) und der Grundstruktur (110) zugewandt sind, angeordnet ist.

12. Aufhängung nach Anspruch 4,
**dadurch gekennzeichnet, dass**
die zwei zusätzlichen Verbindungselemente Ansätze (250, 260) umfassen, die sich von der Grundstruktur (210) in Richtung des entgegengesetzten Randes erstrecken, wobei diese Ansätze abnehmbar an der Grundstruktur angebracht sind.

13. Aufhängung nach dem vorhergehenden Anspruch,
**dadurch gekennzeichnet, dass**
die Grundstruktur (210) eine dreieckige Form aufweist, und dass die zwei Ansätze (250, 260) sich von zwei Seiten dieses Dreiecks erstrecken.

14. Aufhängung nach Anspruch 12 oder 13,
**dadurch gekennzeichnet, dass**
zumindest ein weiteres Paar Ansätze vorgesehen ist, deren Steifigkeit sich von der des ersten Paares Ansätze (250, 260) unterscheidet.

15. Straßentransportfahrzeug mit einem Fahrgestell und zumindest einer Starrachse (2), das eine Aufhängung nach einem der vorhergehenden Ansprüche umfasst.

## Revendications

1. Suspension pour un essieu rigide (2) d'un véhicule de transport routier, en particulier d'un véhicule poids lourd, comprenant des moyens pour la rétention longitudinale de l'essieu par rapport à un châssis du véhicule, en particulier deux barres longitudinales (4, 6), et des moyens pour la rétention transversale de cet essieu par rapport à ce châssis, formant également un moyen anti-roulis, **caractérisée en ce que** ces moyens de rétention transversale comprennent une structure de base (10 ; 110 ; 210), deux premiers joints articulés (20, 22; 220, 222) assurant l'articulation entre la structure de base et l'un ou l'autre parmi l'essieu et le châssis, un joint articulé additionnel (24; 224) formant l'articulation de la structure de base avec l'autre élément parmi l'essieu et le châssis, et deux organes de raccordement additionnels (50, 60 ; 150 ; 250, 260), raccordant la structure de base et l'autre parmi l'essieu et le châssis, ces organes de raccordement additionnels assurant la fonction anti-roulis.

2. Suspension selon la revendication 1, **caractérisée en ce que** la structure de base est une plaque (10 ; 110 ; 210).

3. Suspension selon la revendication précédente, **caractérisée en ce que** la plaque (10; 110; 210) s'étend le long d'un premier plan, appelé le plan supérieur, sensiblement parallèle à un autre plan, appelé le plan inférieur, définis par les moyens de rétention longitudinale (4, 6).

4. Suspension selon l'une quelconque des revendications précédentes, **caractérisée en ce que** les deux premiers joints articulés (20, 22 ; 220, 222) sont placés sur un premier bord transversal, en particulier un bord arrière (11) de la structure de base (10 ; 210), tandis que le joint articulé additionnel (24 ; 224) est placé sur le bord transversal opposé (12) dans une position médiane par rapport à l'axe longitudinal médian (X) du véhicule.

5. Suspension selon la revendication précédente, **caractérisée en ce que** les deux organes de raccordement additionnels (50, 60 ; 150) sont placés sur ledit bord opposé (12), de manière symétrique par rapport à l'axe longitudinal médian (X).

6. Suspension selon l'une quelconque des revendications précédentes, **caractérisée en ce que** chaque organe de raccordement additionnel (50, 60 ; 150) a deux degrés de liberté en translation par rapport à la structure de base (10 ; 110) dans les deux directions qui sont perpendiculaires l'une à l'autre du plan de cette structure, chaque organe de raccordement étant d'autre part fixé à la structure de base dans une troisième direction (Z) perpendiculaire à ce plan.

7. Suspension selon la revendication précédente, **caractérisée en ce que** chaque organe de raccordement additionnel (50, 60 ; 150) comporte un corps (52 ; 152) qui est généralement en forme de C, dont les brides (54 ; 154) joignent la structure de base (10 ; 110).

8. Suspension selon la revendication précédente, **caractérisée en ce que** le corps (52 ; 152) de l'organe de raccordement additionnel (50 ; 150) est étendu par l'intermédiaire d'une fixation au châssis du véhicule, en particulier deux oreilles (56 ; 156) pourvues d'orifices pour que des éléments de fixation, tels que des vis, passent au travers.

9. Suspension selon l'une des revendications 7 ou 8, **caractérisée en ce que** le corps (52) de l'organe de raccordement additionnel (50) est constitué d'une matière élastique.

10. Suspension selon la revendication précédente, **caractérisée en ce qu'**au moins une autre paire d'organes de raccordement additionnels est prévue, dont la rigidité est différente de celle de la première paire d'organes de raccordement additionnels (50, 60).

11. Suspension selon la revendication 7 ou 8, **caractérisée en ce que** le corps (152) de l'organe de raccordement additionnel est rigide, et **en ce qu'**un plot anti-vibratile (155) est interposé entre les parois en regard de ce corps (152) et de la structure de base (110).

12. Suspension selon la revendication 4, **caractérisée en ce que** les deux organes de raccordement additionnels comprennent des oreilles (250, 260) s'étendant, depuis la structure de base (210), vers ledit bord opposé, ces oreilles étant fixées de façon amovible à la structure de base.

13. Suspension selon la revendication précédente, **caractérisée en ce que** la structure de base (210) a une forme triangulaire, et **en ce que** les deux oreilles (250, 260) s'étendent depuis les deux côtés de ce triangle.

14. Suspension selon la revendication 12 ou 13, **caractérisée en ce qu'**au moins une autre paire d'oreilles est prévue, dont la rigidité est différente de celle de la paire d'oreilles (250, 260).

15. Véhicule de transport routier comprenant un châssis, et au moins un essieu rigide (2) comprenant une suspension selon l'une quelconque des revendications précédentes.
